# EUROPÄISCHE PATENTSCHRIFT

(11) **EP 1 939 600 B1**
(45) Veröffentlichungstag und Bekanntmachung des Hinweises auf die Patenterteilung: **10.08.2011**
(21) Anmeldenummer: 07118142.4
(22) Anmeldetag: 09.10.2007
(51) Int. Cl.: G01L 9/12, G01L 19/00

(54) **Druckmessaufnehmer**
Pressure sensor device
Dispositif de mesure de pression

(30) Priorität: 19.10.2006 DE 202006016225 U
(43) Veröffentlichungstag der Anmeldung: 02.07.2008
(73) Patentinhaber: Endress+Hauser GmbH+Co. KG, 79689 Maulburg (DE)
(72) Erfinder: Rech, Volkmar, 66346, Püttlingen (DE); Hügel, Michael, 79541, Lörrach (DE)
(74) Vertreter: Andres, Angelika Maria

(56) Entgegenhaltungen:
- EP-A1- 0 651 240
- WO-A1-82/01997
- WO-A1-86/02446
- WO-A1-97/30333
- DE-U1- 8 711 127
- GB-A- 2 411 235
- US-A- 4 795 440
- US-A- 5 869 766
- US-A1- 2004 173 030
- US-A1- 2004 255 645

## Beschreibung

Die Erfindung betrifft einen Druckmessaufnehmer zur Erfassung eines Druckes eines strömenden Mediums.

Die Dokumente WO 97/30333 A1, US 5 869 766 A, US 2004/173030 A1, WO 82/01997 A1, US 4 795 440 A, DE 87 11 127 U1, US 2004/255645 A1, GB 2 411 235 A, WO 86/02446 A1 und EP 0 651 240 A1 betreffen Messaufnehmer und deren Konstruktionsprinzipien.

WO 97/30333 A1 offenbart einen Durchflussmessaufnehmer nach dem Differenzdruckprinzip, wobei zwei Drucksensoren oberhalb bzw. unterhalb einer Drossel angeordnet sind. US 5 869 766 A offenbart einen nicht kontaminierenden Drucksensor. Die anderen Dokumente offenbaren weitere Messaufnehmer zum technischen Hintergrund der vorliegenden Erfindung.

Druckmessaufnehmer werden unter anderem in der Medizintechnik zur Erfassung von Drücken in Leitungssystemen, beispielsweise im Rahmen von Dialyseeinrichtungen, eingesetzt. Eine typische Anwendung ist hierbei die Erfassung eines Druck vor oder hinter einem im Leitungssystem eingesetzten Filter. Derartige Druckmessaufnehmer werden in der Regel in eine bestehende im Betrieb von einem Medium, z.B. von Blut oder einer Salzlösung, durchströmten Leitung eingesetzt.

Dabei werden bevorzugt Druckmessaufnehmer mit metallfreien Drucksensoren, beispielsweise keramischen Drucksensoren eingesetzt. Metalle weisen den Nachteil auf, dass sie korrodieren. Dies ist insb. dann der Fall, wenn sie mit in der Medizintechnik häufig verwendeten salzhaltigen Flüssigkeiten in Kontakt kommen. Keramische Drucksensoren weisen beispielsweise einen auf eine Grundkörper angeordneten druckempfindlichen Membran auf. Der Grundkörper besteht z.B. aus Keramik, z.B. aus Aluminiumoxid (Al₂O₃). Die Membran kann ebenfalls aus Keramik bestehen oder z.B. aus Glas oder aus Saphir sein. Die Membran und der Grundkörper sind an deren Rand unter Bildung einer Messkammer mittels einer Fügestelle druckdicht und/oder gasdicht miteinander verbunden. Die Membran ist druckempfindlich, d.h. ein auf sie einwirkender Druck p bewirkt eine Auslenkung der Membran aus deren Ruhelage. Der Drucksensor weist einen elektromechanischen Wandler zur Umwandlung der druckabhängigen Auslenkung der Membran in eine elektrische Messgröße auf. Dieser umfasst beispielsweise eine auf einer Innenseite der Membran angeordnete Elektrode und mindestens eine auf einer gegenüberliegenden membran-zugewandten Außenseite des Grundkörpers angeordnete Gegenelektrode. Eine Kapazität des durch die Elektrode und die Gegenelektrode gebildeten Kondensators wird durch die Auslenkung der Membran bestimmt und ist somit ein Maß für den auf die Membran einwirkenden Druck.

Keramische Drucksensoren sind nicht nur metallfrei und damit nicht korrosionsanfällig, sie weisen darüber hinaus den Vorteil auf, dass sie eine über sehr lange Zeit stabile Messgenauigkeit aufweisen. Ein Grund hierfür ist die feste ionische Bindung von Keramik, durch die der Werkstoff sehr dauerhaft ist und im Vergleich zu anderen Werkstoffen, z.B. Metallen, praktisch nicht altert.

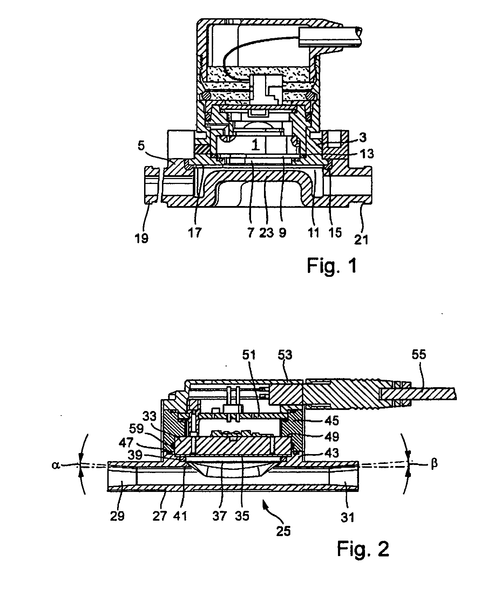

Fig. 1 zeigt ein Beispiel eines heute bereits im Einsatz befindlichen Druckmessaufnehmers mit einem keramischen Drucksensor 1. Der Drucksensor 1 ist in ein metallisches Sensorgehäuse 3 eingespannt, dass auf einem im Messbetrieb vom Medium durchströmten Messaufnehmergehäuse 5 montiert ist. Das Sensorgehäuse 3 weist auf dessen dem Messaufnehmergehäuse 5 zugewandten Frontseite eine Ausnehmung 7 auf, die eine druckempfindliche Membran 9 des Drucksensors 1 freigibt. Die Ausnehmung 7 schließt unmittelbar an eine Ausnehmung 11 im Messaufnehmergehäuse 5 an, über die das im Messbetrieb den Messaufnehmer durchströmende Medium der Membran 9 zugeführt wird. Das Sensorgehäuse 3 besteht aus Metall. Zwischen dem Drucksensor 1 und dem Sensorgehäuse 3 befindet sich eine Sensordichtung 13, die dazu dient, zu verhindern, dass das Medium in das Sensorgehäuse 3 eindringt. Zwischen dem Sensorgehäuse 3 und dem Messaufnehmergehäuse 5 ist eine Prozessdichtung 15 angeordnet. Vorzugsweise ist zusätzlich eine Formdichtung 17 vorgesehen, die diejenigen Bereiche des Sensorgehäuses 3, die in die Ausnehmung 11 des Messaufnehmergehäuses 5 eindringen umgibt. Hierdurch wird verhindert, dass diese Bereiche mit dem Medium in Kontakt kommen. Derartige Dichtungen altern jedoch und es besteht die Gefahr, dass das Medium die Dichtungen hinterwandert. Gerade bei salzhaltigen Medien kann dies zu Korrosion führen. Um dies zu vermeiden können sehr hochwertige korrosionsbeständige Metalle für das Sensorgehäuse eingesetzt werden. Diese sind jedoch in der Regel teuer.

Das Messaufnehmergehäuse weist einen rohrförmigen Einlass 19 und einen rohrförmigen Auslass 21 auf. Dazwischen befindet sich ein Leitungsabschnitt 23 mit einem Staukörper, der den Querschnitt des Leitungsabschnitts 23 derart verringert, dass das Medium im wesentlichen nur die beiden aneinander angrenzenden Ausnehmungen 7, 11 durchströmt und dadurch an der Membran 9 vorbei fließt. Der Staukörper ist sehr gut geeignet das durchströmende Medium zu führen. Gleichzeitig bewirkt er aber einen unter Umständen sehr hohen Druckverlust im Messaufnehmergehäuses, der gerade in medizinischen Anwendungen unerwünscht ist.

Es ist eine Aufgabe der Erfindung einen möglichst korrosionsfreien Druckmessaufnehmer anzugeben, der einen geringen Druckverlust bewirkt.

Hierzu besteht die Erfindung in einem Druckmessaufnehmer mit
- einen Messaufnehmergehäuse ,
   -- dass einen geraden rohrförmigen Leitungsabschnitt aufweist, der im Messbetrieb von einem Medium, dessen Druck zu messen ist, durchströmt wird,
      --- an dessen einem Ende ein konisch in Richtung des Leitungsabschnitts zulaufender Einlass angeformt ist, über den das Medium zuströmt,
      --- an dessen anderem Ende ein konisch in Richtung des Leitungsabschnitts zulaufender Auslass angeformt ist, über den das Medium abfließt,
      --- der eine Ausnehmung aufweist, in die ein keramischer Drucksensor mit einer druckempfindlichen Membran unter Zwischenfügung einer Sensordichtung derart eingesetzt ist, dass das Messaufnehmergehäuse eine Frontseite des Drucksensors außenseitlich umfasst, und die Sensordichtung eine Abdichtung zwischen dem Drucksensor und dem Messaufnehmergehäuse bewirkt, und
- einem Sensorgehäuse,
   -- das unter Zwischenfügung eine Gehäusedichtung unmittelbar auf dem Messaufnehmergehäuse montiert ist,
   -- das eine Ausnehmung aufweist, die eine Rückseite des Drucksensors außenseitlich umschließt, bei dem
- der Drucksensor zwischen dem Sensorgehäuse und dem Messaufnehmergehäuse in axialer Richtung eingespannt ist,

wobei das Drucksensorgehäuse auf dessen von dem Messaufnehmergehäuse abgewandten Seite von einem Gehäusedeckel abgeschlossen ist, aus dem seitlich elektrische Anschlussleitungen für den Druckmessaufnehmer heraus geführt sind,
- wobei das Messaufnehmergehäuse aus einem weichen Kunststoff, insb.
   einem Kunststoff mit einer Bruchdehnung in der Größenordnung von 4 % besteht,
- das Sensorgehäuse aus einem harten Kunststoff, insb. einem Kunststoff mit einer Bruchdehnung in der Größenordnung von 2 % besteht, und
- der Gehäusedeckel aus einem weichen Kunststoff, insb. einem Kunststoff mit einer Bruchdehnung in der Größenordnung von 4 % besteht.

Gemäß einer Weiterbildung weist der konisch in Richtung des Leitungsabschnitts zulaufende Einlass einen Öffnungswinkel auf, der zwischen 7° und 40° liegt.

Gemäß einer Weiterbildung weist der konisch in Richtung des Leitungsabschnitts zulaufende Auslass einen Öffnungswinkel auf, der zwischen 5° und 16° liegt.

Gemäß einer bevorzugten Ausgestaltung bestehen das Sensorgehäuse und das Messaufnehmergehäuse aus einem Kunststoff.

Gemäß einer weiteren Weiterbildung ist im Sensorgehäuse eine zusätzliche Dichtung angeordnet, die den Drucksensor radial umgibt.

Die Erfindung und deren Vorteile werden nun anhand der Figuren der Zeichnung, in der ein Ausführungsbeispiel dargestellt ist, näher erläutert. Gleiche Elemente sind in den Figuren mit den gleichen Bezugszeichen versehen.

Fig. 1 zeigt einen Schnitt durch einen herkömmlichen Druckmessaufnehmer;

Fig. 2 zeigt einen Schnitt durch einen erfindungsgemäßen Druckmessaufnehmer;

Fig. 3 zeigt eine Draufsicht auf den Druckmessaufnehmer von Fig. 2; und

Fig. 4 zeigt einen Schnitt durch den Druckmessaufnehmer von Fig. 2 in der in Fig. 3 eingezeichneten Schnittebene.

In Fig. 2 ist ein Schnitt durch ein Ausführungsbeispiel eines erfindungemäßen Druckmessaufnehmers dargestellt. Der Druckmessaufnehmer umfasst ein Messaufnehmergehäuse 25, das einen geraden rohrförmigen Leitungsabschnitt 27 aufweist, der im Messbetrieb von einem Medium, dessen Druck zu messen ist, durchströmt wird. An einem Ende des Leitungsabschnitts 27 ist ein konisch in Richtung des Leitungsabschnitts 27 zulaufender Einlass 29 angeformt, über den das Medium im Messbetrieb zuströmt. An dem diesem gegenüberliegenden anderen Ende des Leitungsabschnitts 27 ist ein konisch in Richtung des Leitungsabschnitts 27 zulaufender Auslass 31 angeformt ist, über den das Medium im Messbetrieb wieder abfließt. Diese Bauform ist der Bauform von in der Durchflussmesstechnik häufig eingesetzten Venturi-Düsen nachempfunden. In der Durchflussmesstechnik wird der vor der Düse herrschende Druck und der Druck im Bereich der Verengung gemessen und anhand der Differenz dieser beiden Drücke ein Volumenstrom eines die Venturi-Düse durchströmenden Mediums bestimmt. Diese Formgebung wird hier zur Druckmessung eingesetzt, da sie den großen Vorteil eines sehr geringen Druckverlustes bietet. Der Grund hierfür besteht in einem physikalischen Effekt, der gelegentlich auch als Venturi-Prinzip der Druckrückgewinnung bezeichnet wird. Die hier gewählte besondere Formgebung mit einer einlassseitigen konischen Querschnittsverjüngung, einem rohrförmigen geraden Mittelteil und einer auslassseitigen konischen Querschnittsvergrößerung bewirkt, dass sich das einlassseitig beschleunigte Medium dergestalt am auslassseitig langsamer fließenden Medium aufstauen kann, dass es zu einer beträchtlichen Druckrückgewinnung kommt. Der insgesamt auftretende Druckverlust ist damit deutlich geringer, als die Druckdifferenz zwischen einem vor dem Einlass 29 und einem im rohrförmigen Leitungsabschnitt 27 herrschenden Druck. Dieser Effekt ist besonders groß, wenn der Öffnungswinkel α des konisch in Richtung des Leitungsabschnitts zulaufenden Einlasses 29 und der Öffnungswinkel β des konisch in Richtung des Leitungsabschnitts 27 zulaufenden Auslasses 31 verhältnismäßig klein sind. Vorzugsweise liegt der Öffnungswinkel α des Einlasses 29 zwischen 7° und 40° und der Öffnungswinkel β des Auslasses 31 zwischen 5° und 16°. Tests haben gezeigt, dass durch die erfindungsgemäße Bauform bei einem Durchfluss von einem Liter Wasser pro Minute ein Druckabfall von weniger als 6 mbar erzielt werden kann.

Der Druckmessaufnehmer weist einen keramischen Drucksensor 33 auf. Hierzu eignen sich die eingangs beschriebenen keramischen Drucksensoren, mit einer auf einem Grundkörper angeordneten druckempfindlichen Membran 35.

Der Grundkörper besteht z.B. aus Keramik, z.B. aus Aluminiumoxid (Al₂O₃ ). Die Membran 35 kann ebenfalls aus Keramik bestehen oder z.B. aus Glas oder aus Saphir sein. Die Membran 35 und der Grundkörper sind an deren Rand unter Bildung einer Messkammer mittels einer Fügestelle druckdicht und gasdicht miteinander verbunden. Die Membran 35 ist druckempfindlich, d.h. ein auf sie einwirkender Druck p bewirkt eine Auslenkung der Membran 35 aus deren Ruhelage. Der Drucksensor 33 weist einen elektromechanischen Wandler zur Umwandlung der druckabhängigen Auslenkung der Membran in eine elektrische Messgröße auf. Dieser umfasst beispielsweise eine auf einer Innenseite der Membran angeordnete Elektrode und mindestens eine auf einer gegenüberliegenden membran-zugewandten Außenseite des Grundkörpers angeordnete Gegenelektrode. Eine Kapazität des durch die Elektrode und die Gegenelektrode gebildeten Kondensators wird durch die Auslenkung der Membran bestimmt und ist somit ein Maß für den auf die Membran einwirkenden Druck. Hierzu ist auf der membran-abgewandten Rückseite des Grundkörpers eine elektronische Schaltung angeordnet, die die Kapazität des Kondensators erfasst und in ein elektrisches Ausgangssignal umwandelt, das über entsprechende Anschlussleitungen einer weiteren Auswertung und/oder Verarbeitung zugänglich ist.

Erfindungsgemäß ist der keramische Drucksensor 33 unmittelbar auf dem Messaufnehmergehäuse 25 montiert. Hierzu weist das Messaufnehmergehäuse 25 im Bereich des geraden Leitungsabschnitts 27 eine Ausnehmung 37 auf, in die der keramische Drucksensor 33 unter Zwischenfügung einer Sensordichtung 39 derart eingesetzt ist, dass das Messaufnehmergehäuse 25 eine Frontseite des Drucksensors 33 außenseitlich umfasst, und die Sensordichtung 39 eine Abdichtung zwischen dem Drucksensor 33 und dem Messaufnehmergehäuse 25 bewirkt. Das Messaufnehmergehäuse 25 weist in dem dargestellten Ausführungsbeispiel einen die Ausnehmung 37 umfassenden sich radial nach innen erstreckenden Absatz 41 auf, auf dem die Sensordichtung 39 aufliegt. Auf der Sensordichtung 39 liegt der Drucksensor 33 mit einem äußeren Rand der Membran 35 auf. An den Absatz 41 ist ein zylindrischer Gehäuseabschnitt 43 angeformt, der die Frontseite des Drucksensors 33, hier die Membran 35 und einen daran angrenzenden Teil des Grundkörpers außenseitlich radial umschließt.

Zusätzlich umfasst der Druckmessaufnehmer ein Sensorgehäuse 45, dass unter Zwischenfügung eine Gehäusedichtung 47 unmittelbar auf dem Messaufnehmergehäuse 25 montiert ist. Das Sensorgehäuse 45 ist im wesentlichen zylindrisch und liegt mit einer ringzylindrischen Stirnfläche unter Zwischenfügung der Gehäusedichtung 47 auf dem zylindrischen Gehäuseabschnitt 43 auf. Dadurch wird bewirkt, dass die Gehäusedichtung 47 im Hinblick auf ein den Druckmessaufnehmer durchströmendes Medium hinter der Sensordichtung 39 liegt und das Sensorgehäuse 45 nicht in Kontakt mit dem Medium kommt.

Das Sensorgehäuse 45 weist eine Ausnehmung auf, die dazu dient eine nicht in das Messaufnehmergehäuse 25 eingefasste Rückseite des Drucksensors 33 aufzunehmen. Die Ausnehmung umschließt die Rückseite des Drucksensors 33 außenseitlich und ist auf deren vom Messaufnehmergehäuse 25 abgewandten Seite durch einen sich radial nach innen erstreckenden Absatz 49 begrenzt, der auf einem äußeren Rand des Grundkörpers des Drucksensors 33 aufliegt. Hierdurch ist der Drucksensor 33 zwischen dem Sensorgehäuse 45 und dem Messaufnehmergehäuse 25 in axialer Richtung eingespannt.

Im Sensorgehäuse 45 ist eine Platine 51 angeordnet, auf der sich eine Messaufnehmerelektronik befindet, die beispielsweise dazu dient, die mittels des elektromechanischen Wandlers und der elektronischen Schaltung abgeleiteten Ausgangssignale in ein vom gemessenen Druck abhängiges Ausgangssignal des Druckmessaufnehmers umzuwandeln.

Das Drucksensorgehäuse 45 ist auf dessen von dem Messaufnehmergehäuse 25 abgewandten Seite von einem Gehäusedeckel 53 abgeschlossen, aus dem seitlich elektrische Anschlussleitungen 55 für den Druckmessaufnehmer heraus geführt sind. Über die Anschlussleitungen 55 erfolgt vorzugsweise die Energieversorgung des Druckmessaufnehmers und die Ausgabe des Ausgangssignals des Druckmessaufnehmers.

Da der Drucksensor 33 unmittelbar auf das Messaufnehmergehäuse 25 montiert wird, können sowohl das Sensorgehäuse 45 als auch der Gehäusedeckel 53 eine sehr geringe Bauhöhe aufweisen. Hierdurch wird erreicht, dass der Druckmessaufnehmer insgesamt eine sehr geringe Bauhöhe aufweist. Dies ist insb. bei Anwendungen in der Medizintechnik von großem Vorteil, da in medizintechnischen Anlagen häufig nur sehr wenig Platz zur Verfügung steht.

Vorzugsweise bestehen das Sensorgehäuse 45 und das Messaufnehmergehäuse 25 aus einem Kunststoff. Dies bietet den Vorteil eines sehr hohen Isolationswiderstandes gegenüber dem den Druckmessaufnehmer durchströmenden Medium. Je nach Wahl der Kunststoffe sind Isolationswiderstände von mehr als 2 GOhm erzielbar. Der Gehäusedeckel 53 besteht vorzugsweise ebenfalls aus einem Kunststoff.

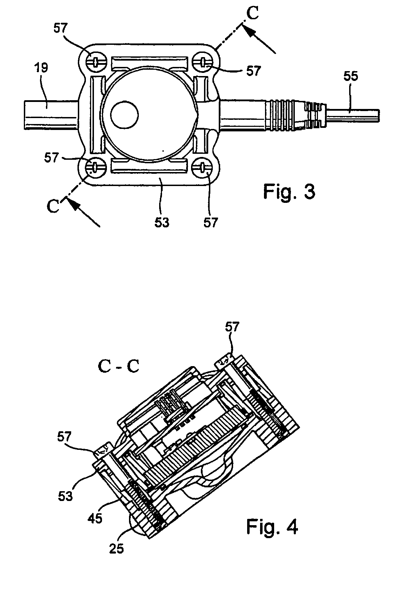

Die Montage des erfindungsgemäßen Druckmessaufnehmers erfolgt, indem der Drucksensor 33 unter Zwischenfügung der Sensordichtung 39 in die Ausnehmung 37 des Messaufnehmergehäuses 25 eingesetzt wird, das Sensorgehäuse 45 auf das Messaufnehmergehäuse 25 unter Zwischenfügung der Gehäusedichtung 47 auf das Messaufnehmergehäuse aufgesetzt wird, und anschließend der Gehäusedeckel 53 auf das Sensorgehäuse 45 gesetzt wird. Abschließend werden das Messaufnehmergehäuse 25, das Sensorgehäuse 45 und der Gehäusedeckel 53 miteinander verschraubt. Fig. 3 zeigt hierzu eine Draufsicht auf den Druckmessaufnehmer und Fig. 4 zeigt einen Schnitt entlang der in Fig. 3 eingezeichneten Schnittebene C-C. Die Verschraubung erfolgt durch vier Bolzenschrauben 57, die durch den Gehäusedeckel 53 und das Sensorgehäuse 45 hindurch in das Messaufnehmergehäuse 25 eingeschraubt werden.

Durch die Verschraubung des Druckmessaufnehmers wird der Drucksensor 33 in axialer Richtung eingespannt. Dabei ist es von Vorteil, wenn für den Gehäusedeckel 53 und das Messaufnehmergehäuse 25 ein weicher und für das Sensorgehäuse 45 ein harter Kunststoff verwendet wird. Vorzugsweise wird für den Druckmessaufnehmer 25 und den Gehäusedeckel 53 ein Kunststoff mit einer Bruchdehnung in der Größenordnung von 4 %, und für das Sensorgehäuse 45 ein Kunststoff mit einer Bruchdehnung in der Größenordnung von 2 % verwendet werden. Die Bruchdehnung ist ein Materialkennwert, der die prozentuale Verlängerung eines Werkstoffstückes im Augenblick des Bruches bezogen auf dessen Anfangslänge angibt.

Als Werkstoff für das Messaufnehmergehäuse 25 und den Gehäusedeckel 53 eignet sich z.B. Polyphenylenoxid (PPO). Polyphenylenoxid (PPO) ist ein Kunststoff mit guter thermischer Beständigkeit und sehr guten dielektrischen Eigenschaften.

Als Werkstoff für das Sensorgehäuse 45 kann beispielsweise Polyphenylensulfid (PPS) verwendet werden. Polyphenylensulfid ist beispielsweise unter dem Handelsnamen Fortron ® im Handel erhältlich und ist ein hochtemperaturbeständiger thermoplastischer Kunststoff, der für die meisten Flüssigkeiten und Gase undurchlässig ist und hervorragende Eigenschaften als elektrischer Isolator aufweist.

Durch diese Schichtung von Materialien unterschiedlicher Härte wird zum einen eine feste Einspannung des Drucksensors 33 gewährleistet und zum anderen werden Risse oder andere mechanische Beschädigungen, die durch die bei der Verschraubung auftretenden Kräfte verursacht werden könnten, vermieden.

Die Einspannung des Drucksensors 33 lässt sich noch weiter verbessern, indem zwischen dem Sensorgehäuse 45 und dem Drucksensor 33 eine zusätzliche Dichtung 59 angeordnet wird, die den Drucksensor 33 radial umgibt. Hierdurch werden Verspannungen des Drucksensors 33 vermieden.

**Tabelle 1**

| | |
|---|---|
| 1 | Drucksensor |
| 3 | Sensorgehäuse |
| 5 | Messaufnehmergehäuse |
| 7 | Ausnehmung |
| 9 | Membran |
| 11 | Ausnehmung |
| 13 | Sensordichtung |
| 15 | Prozessdichtung |
| 17 | Formdichtung |
| 19 | Einlass |
| 21 | Auslass |
| 23 | Leitungsabschnitt |
| 25 | Messaufnehmergehäuse |
| 27 | Leitungsabschnitt |
| 29 | Einlass |
| 31 | Auslass |
| 33 | keramischer Drucksensor |
| 35 | Membran |
| 37 | Ausnehmung |
| 39 | Sensordichtung |
| 41 | Absatz |
| 43 | Gehäuseabschnitt |
| 45 | Sensorgehäuse |
| 47 | Gehäusedichtung |
| 49 | Absatz |
| 51 | Platine |
| 53 | Gehäusedeckel |
| 55 | Anschlussleitungen |
| 57 | Bolzenschrauben |
| 59 | zusätzliche Dichtung |

## Patentansprüche

1. Druckmessaufnehmer mit
- einen Messaufnehmergehäuse (25),
-- dass einen geraden rohrförmigen Leitungsabschnitt (27) aufweist, der im Messbetrieb von einem Medium, dessen Druck zu messen ist, durchströmt wird,
-- an dessen einem Ende ein konisch in Richtung des Leitungsabschnitts (27) zulaufender Einlass (29) angeformt ist, über den das Medium zuströmt,
--- an dessen anderem Ende ein konisch in Richtung des Leitungsabschnitts (27) zulaufender Auslass (31) angeformt ist, über den das Medium abfließt,
--- der eine Ausnehmung (37) aufweist, in die ein keramischer Drucksensor (33) mit einer druckempfindlichen Membran (35) unter Zwischenfügung einer Sensordichtung (39) derart eingesetzt ist, dass das Messaufnehmergehäuse (25) eine Frontseite des Drucksensors (33) außenseitlich umfasst, und die Sensordichtung (39) eine Abdichtung zwischen dem Drucksensor (33) und dem Messaufnehmergehäuse (25) bewirkt, und
- einem Sensorgehäuse (45),
- das unter Zwischenfügung eine Gehäusedichtung (47) unmittelbar auf dem Messaufnehmergehäuse (25) montiert ist,
-- das eine Ausnehmung aufweist, die eine Rückseite des Drucksensors (33) außenseitlich umschließt, bei dem
- der Drucksensor (33) zwischen dem Sensorgehäuse (45) und dem Messaufnehmergehäuse (25) in axialer Richtung eingespannt ist, **dadurch gekennzeichnet, dass** das Drucksensorgehäuse (45) auf dessen von dem Messaufnehmergehäuse (25) abgewandten Seite von einem Gehäusedeckel (53) abgeschlossen ist, aus dem seitlich elektrische Anschlussleitungen (55) für den Druckmessaufnehmer heraus geführt sind
wobei
- das Messaufnehmergehäuse (25) aus einem weichen Kunststoff besteht, insb. einem Kunststoff mit einer Bruchdehnung in der Größenordnung von 4 %,
- das Sensorgehäuse (45) aus einem harten Kunststoff besteht, insb. einem Kunststoff mit einer Bruchdehnung in der Größenordnung von 2 %, und
- der Gehäusedeckel (53) aus einem weichen Kunststoff besteht, insb. einem Kunststoff mit einer Bruchdehnung in der Größenordnung von 4 %.

2. Druckmessaufnehmer nach Anspruch 1, bei dem der konisch in Richtung des Leitungsabschnitts (27) zulaufende Einlass (29) einen Öffnungswinkel (α) aufweist, der zwischen 7° und 40° liegt.

3. Druckmessaufnehmer nach Anspruch 1, bei dem der konisch in Richtung des Leitungsabschnitts (27) zulaufende Auslass (31) einen Öffnungswinkel (β) aufweist, der zwischen 5° und 16° liegt.

4. Druckmessaufnehmer nach Anspruch 1, bei dem im Sensorgehäuse (45) eine zusätzliche Dichtung (59) angeordnet ist, die den Drucksensor (33) radial umgibt.

## Claims

1. Pressure transducer with
- a transducer housing (25),
-- which has a straight tube-like pipe section (27) through which a medium - whose pressure must be measured - flows during operation
--- at one end of which a conical inlet (29) is formed in the direction of the pipe section (27) via which the medium enters
--- at the other end of which a conical outlet (31) is formed in the direction of the pipe section (27) via which the medium exits
--- which has a recess (37) into which a ceramic pressure sensor (33) with a pressure-sensitive membrane (35) is introduced using a sensor seal (39) in such a way that the transducer housing (25) comprises a front side of the pressure sensor (33) on the exterior and the sensor seal (39) causes a sealing effect between the pressure sensor (33) and the transducer housing (25) and
- a sensor housing (45)
-- which is mounted directly on the transducer housing (25) using a housing seal (47)
-- which has a recess which encloses a rear part of the pressure sensor (33) on the exterior, where
- the pressure sensor (33) is clamped in an axial direction between the sensor housing (45) and the transducer housing (25), **characterised in that** the side of the pressure sensor housing (45) facing away from the transducer housing (25) is sealed by a housing cover (53) out of the side of which electrical connection cables (55) for the pressure sensor are routed, where
- the transducer housing (25) is made from a soft plastic particularly a plastic with a breaking elongation of 4%
- the sensor housing (45) is made from a hard plastic, particularly a plastic with a breaking elongation of 2%, and
- the housing cover (53) is made from a soft plastic particularly a plastic with a breaking elongation of 4%

2. Pressure transducer as per Claim 1, where the conical inlet (29) in the direction of the pipe section (27) has an opening angle (□) of between 7° and 40°.

3. Pressure transducer as per Claim 1, where the conical outlet (31) in the direction of the pipe section (27) has an opening angle (β) of between 5° and 16°.

4. Pressure transducer as per Claim 1, where an additional seal (59) is arranged in the sensor housing (45) and surrounds the pressure sensor (33) in a radial manner.

## Revendications

1. Transmetteur de pression avec
- un boîtier de transmetteur (25),
-- lequel présente une section de conduite (27) tubulaire droite qui, en mode mesure, est parcourue par un produit, dont la pression est à mesurer,
--- à l'une extrémité de laquelle est formée une entrée (29), conique en direction de la section de conduite (27), par l'intermédiaire de laquelle le produit afflue,
--- à l'autre extrémité de laquelle est formée une sortie (31), conique en direction de la section de conduite (27), par l'intermédiaire de laquelle le produit est évacué,
--- laquelle section présente un évidement (37), dans laquelle est introduit un capteur de pression (33) céramique avec une membrane (35) sensible à la pression, moyennant l'insertion d'un joint de capteur (39), de telle manière que le boîtier de transmetteur (25) comprenne à l'extérieur une face avant du capteur de pression (33), et que le joint de capteur (39) génère une étanchéité entre le capteur de pression (33) et le boîtier de transmetteur (25), et
- un boîtier de capteur (45),
-- lequel est monté, moyennant l'insertion d'un joint de boîtier (47), immédiatement sur le boîtier de transmetteur (25),
-- lequel présente un évidement, qui enferme à l'extérieur une partie arrière du capteur de pression (33), pour lequel
- le capteur de pression (33) est serré en direction axiale entre le boîtier de capteur (45) et le boîtier de transmetteur (25), **caractérisé en ce que** le boîtier de capteur de pression (45) est ponctué, sur son côté opposé au boîtier de transmetteur (25), par un couvercle de boîtier (53), à partir duquel sont sortis latéralement des conducteurs de raccordement électriques (55) pour le transmetteur de pression,
- le boîtier de transmetteur (25) étant constitué d'une matière plastique tendre, notamment une matière plastique avec un allongement à la rupture d'un ordre de grandeur de 4 %,
- le boîtier de capteur (45) étant constitué d'une matière plastique dure, notamment une matière plastique avec un allongement à la rupture d'un ordre de grandeur de 2 %, et
- le couvercle de capteur (53) étant constitué d'une matière plastique tendre, notamment une matière plastique avec un allongement à la rupture d'un ordre de grandeur de 4 %.

2. Transmetteur de pression selon la revendication 1, pour lequel l'entrée (29) conique en direction de la section de conduite (27) présente un angle d'ouverture (□), compris entre 7° et 40°.

3. Transmetteur de pression selon la revendication 1, pour lequel la sortie (31) conique en direction de la section de conduite (27) présente un angle d'ouverture (ß), compris entre 5° et 16°.

4. Transmetteur de pression selon la revendication 1, pour lequel est disposé, dans le boîtier de capteur (45), un joint (59) supplémentaire, qui entoure radialement le capteur de pression (33).
